# EUROPÄISCHE PATENTSCHRIFT

(11) **EP 0 418 555 B1**
(45) Veröffentlichungstag und Bekanntmachung des Hinweises auf die Patenterteilung: **13.07.1994**
(21) Anmeldenummer: 90115722.2
(22) Anmeldetag: 16.08.1990
(51) Int. Cl.: H01G 9/24, H01G 9/00

(54) **Verfahren zum Herstellen eines Festelektrolykondensators in Chip-Bauweise**
Process of manufacture for a solid electrolytic chip capacitor
Procédé de fabrication d'un condensateur à électrolyte solide sous forme de chip

(30) Priorität: 19.09.1989 DE 3931265
(43) Veröffentlichungstag der Anmeldung: 27.03.1991
(73) Patentinhaber: SIEMENS AKTIENGESELLSCHAFT, 80333 München (DE)
(72) Erfinder: Hilbert, Ferdinand, Dipl.-Ing., D-7920 Heidenheim-Schnaith (DE)

(56) Entgegenhaltungen:
- EP-A- 0 232 868
- DE-A- 3 612 290
- FR-A- 2 443 738
- TOUTE L'ELECTRONIQUE. no. 547, Oktober 1989, PARIS FR Seite 18 "SPRAGUE: DU CONDENSATEUR A L'INDUCTANCE"

## Beschreibung

Die Erfindung betrifft ein Verfahren zum Herstellen eines Festelektrolytkondensators in Chip-Bauweise mit einem gesinterten Anodenkörper aus einem Ventilmetall, einer darauf angeordneten, als Dielektrikum dienenden Oxidschicht, einem als Kathode dienenden halbleitenden Festelektrolyt, einer Kathodenkontaktierung, einem Kathoden- und Anodenanschluß, einer Umhüllung und einem Sicherungselement.

Derartige Festelektrolytkondensatoren verfügen bei Betrieb an niederohmigen Spannungsquellen im Falle eines Spannungsdurchschlags, z.B. bei Falschpolung, über keine Strombegrenzung. Der unter Umständen sehr hohe Kurzschlußstrom kann den Kondensatorkörper so hoch erhitzen, daß der als Anode benützte Sinterkörper zu glühen beginnt. Bei Kondensatoren, welche eine Kunststoffumhüllung besitzen, kann diese Umhüllung in Brand geraten. Wenn derartige Kondensatoren auf Leiterplatten angeordnet sind, kann dies für die benachbarten Bauelemente nachteilige Folgen haben, da sie durch die starke Erhitzung ebenfalls zerstört werden können. Weiterhin besteht die Gefahr, daß die gesamte Leiterplatte in Brand gerät und damit das Gerät zerstört wird.

Aus der DE 25 31 438 C3 ist ein Festelektrolytkondensator bekannt, der mit einer Schmelzsicherung ausgestattet ist, die in der Kathodenzuführung angeordnet ist. Hierbei handelt es sich um bedrahtete und relativ große Bauformen, so daß diese Ausfuhrungsform bei dem äußerst geringen zur Vergügung stehenden Raum bei Festelektrolytkondensatoren in Chip-Bauweise nicht anwendbar ist.

Aufgabe der Erfindung ist es, ein Verfahren zur Herstellung eines Festelektrolytkondensators in Chip-Bauweise mit Sicherungselement anzugeben, der bei einem Spannungsdurchschlag mit anschließender thermischer Überlastung (Eigenerwarmung) sicher abgeschaltet wird und bei dem das Einbringen des Sicherungselementes in das Kondensatorgehäuse automatisierbar und der Kondensator somit wirtschaftlich herstellbar ist.

Diese Aufgabe wird erfindungsgemäß durch das Verfahren gemäß Anspruch 1 gelöst.

Zweckmäßige Ausgestaltungen sind in den Unteransprüchen angeführt.

Der Gegenstand der Erfindung wird anhand des folgenden Ausführungsbeispiels näher erläutert.

In der dazugehörenden Zeichnung zeigen
- FIG 1: einen Ausschnitt aus dem Systemträger mit Sicherungselement,
- FIG 2: einen in den Systemträger montierten Sinterkörper,
- FIG 3: einen umhüllten Kondensator und
- FIG 4: einen Kondensator mit umgebogenen Anschlüssen.

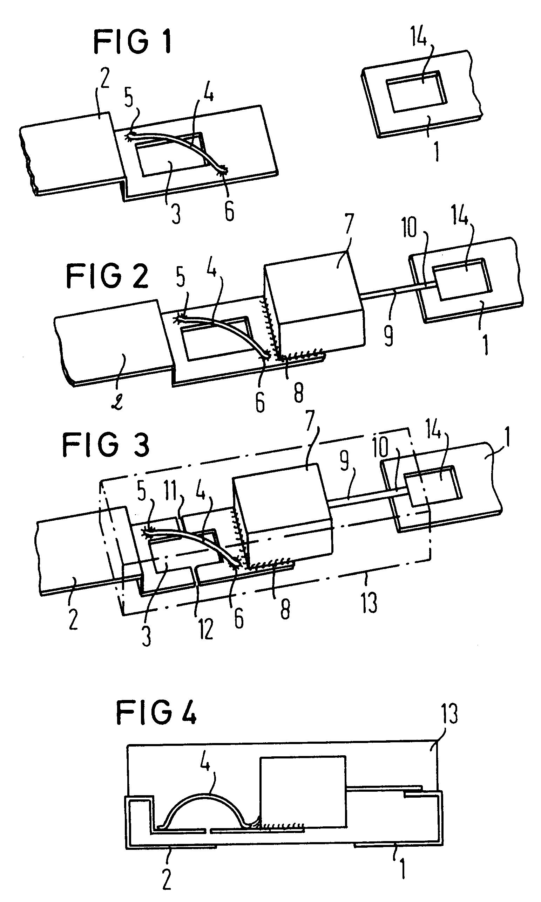

In der FIG 1 ist ausschnittsweise ein kontinuierlicher Systemträger dargestellt, der einen Anodenanschluß 1 mit Ausstanzung 14 und einen Kathodenanschluß 2 mit ausgestanzter Aussparung 3 besitzt. Über der Aussparung 3 ist in einer Schleife ein Sicherungselement 4, z.B. ein Lotdraht, gespannt, das in den Punkten 5 und 6 durch Löten, Schweißen oder Bonden mit dem Kathodenanschluß 2 verbunden ist.

In der FIG 2 ist ein Systemträger dargestellt, in den der gesinterte Anodenkörper 7 über Lötstellen 8 oder einen leitfähigen Kleber mit dem Kathodenanschluß 2 eingebaut ist. Der Anodendraht 9 ist mit dem Anodenanschluß 1 am Punkt 10 verschweißt. Der Sinterkörper 7 besteht aus einem Ventilmetall, vorzugsweise Tantal, und der in den Anodenkörper 7 eingesinterte Anodendraht 9 besteht aus dem gleichen Ventilmetall wie der Körper 7. Als Festelektrolyt wird beispielsweise halbleitendes Mangandioxid verwendet. Zur Kontaktierung der als Kathode dienenden Festelektrolytschicht dient eine Kathodenkontaktierung, z.B. eine Silberleitlackschicht, die mit dem Lot oder dem Kleber 8 elektrisch leitend verbunden ist.

In der FIG 3 ist dargestellt, wie der Kathodenanschluß 2 an den Trennstellen 11, 12 mittels Stanzen oder durch Laserstrahl aufgetrennt ist und eine Kunststoffumhüllung 13 angebracht ist. Nach Anbringen der Trennstellen 11, 12 ist die Sicherung funktionsfähig.

In der FIG 4 ist ein Kondensator mit Anschlüssen 1, 2 dargestellt, die auf die Kunststoffumhüllung 13 umgebogen sind und eine Auflagefläche des Kondensators bilden.

Wenn das Sicherungselement 4 als Schmelzsicherung aus einem Lotmetall besteht, wird vorzugsweise der Kathodenanschluß 2 als Sicherungsträger gewählt.

Für den Fall, daß eine Stromsicherung (Widerstandsdraht) zum Einsatz kommt, können sowohl Kathoden- 2 als auch Anodenanschluß 1 als Sicherungsträger benutzt werden, wobei beim Anodenanschluß 1 z.B. die Ausstanzung 14 überbrückt werden kann.

In beiden Fällen bestehen die Vorteile, daß das Sicherungselement mit einem Automaten auf den Anschluß gelötet, geschweißt oder gebondet werden kann, daß das derart angebrachte Sicherungselement bei der Weiterverarbeitung nicht zu Beschädigungen neigt, daß die Kontaktierung der Anschlüsse mit dem Anodenkörper in der gleichen Weise wie bei einem Kondensator ohne Sicherung durchgeführt werden kann und daß damit der Kondensator mit Sicherung wirtschaftlich herstellbar ist.

## Patentansprüche

1. Verfahren zum Herstellen eines Festelektrolytkondensators in Chip-Bauweise unter Verwendung eines kontinuierlichen Systemträgers, der einen Anodenanschluß (1) mit Ausstanzung (14) und einen Kathodenanschluß (2) mit ausgestanzter Ausssparung (3) besitzt, **dadurch gekennzeichnet**,
daß zunächst über der Aussparung (3) oder der Ausstanzung (14) ein Sicherungselement gespannt wird, das durch Löten, Schweißen oder Bonden mit dem Kathoden(2) bzw. dem Anodenanschluß (1) verbunden wird,
daß anschließend ein gesinterter Anodenkörper (7) bestehend aus einem Ventilmetal, einer darauf angeordneten, als Dielektrikum dienenden Oxidschicht, einem als Kathode dienenden halbleitenden Festelektrolyt und einer Kathodenkontaktierung, mit dem Kathodenanschluß (2) durch Löten oder Kleben verbunden wird und ein im Anodenkörper angeordneter Anodendraht (9) mit dem Anodenanschluß (1) verschweißt wird,
daß nach dem Einbau des Anodenkörpers (7) der Kathoden- (2) bzw. der Anodenanschluß (1) durch Trennstellen (11, 12) im Bereich der Aussparung (3) bzw. der Ausstanzung (14) aufgetrennt wird, und
daß anschließend eine Kunststoffumhüllung (13) hergestellt wird auf die die Anschlüsse (1, 2) umgebogen werden.

2. Verfahren zum Herstellen eines Festelektrolytkondensators nach Anspruch 1 **gekennzeichnet** durch die Verwendung eines Sicherungselements (4) aus einem Widerstandsdraht (Stromsicherung).

3. Verfahren zum Herstellen eines Festelektrolytkondensator nach Anspruch 1 **gekennzeichnet** durch die Verwendung eines Sicherungselements (4) aus einem Lotmetall.

## Claims

1. Method for producing a solid-electrolyte capacitor of chip construction using a continuous system carrier which has an anode connection (1) with a stamped-out region (14) and a cathode connection (2) with a stamped-out cut-out region (3), characterized in that a fuse element is initially stretched over the cut-out region (3) or the stamped-out region (14) and is connected by soldering, welding or bonding to the cathode connection (2) and to the anode connection (1), in that, subsequently, a sintered anode body (7) composed of a valve metal, an oxide layer which is arranged thereon and is used as a dielectric, a semiconductive solid electrolyte which is used as a cathode, and a cathode contact means is connected to the cathode connection (2) by soldering or bonding, and an anode wire (9) which is arranged in the anode body is welded to the anode connection (1), in that, after the installation of the anode body (7), the cathode connection (2) or the anode connection (1) respectively is cut off by means of separation points (11, 12) in the region of the cut-out region (3) or the stamped-out region (14) respectively, and in that, subsequently, a plastic casing (13) is produced onto which the connections (1, 2) are bent around.

2. Method for producing a solid-electrolyte capacitor according to Claim 1, characterized by the use of a fuse element (4) composed of a resistance wire (current fuse).

3. Method for producing a solid-electrolyte capacitor according to Claim 1, characterized by the use of a fuse element (4) composed of a solder metal.

## Revendications

1. Procédé pour fabriquer un condensateur à électrolyte solide dans le mode de réalisation chip, en utilisant un support continu de système, qui possède une borne d'anode (1) présentant une découpe (14) et une borne de cathode (2) dans laquelle est découpée une ouverture (3), caractérisé par le fait
qu'on bloque tout d'abord, au-dessus de l'ouverture (3) ou de la découpe (14), un élément fusible relie par brasage, soudage ou fixation à la borne de cathode (2) ou à la borne d'anode (1),
qu'ensuite on réunit par brasage ou collage, à la borne de cathode (2), une pièce d'anode frittée (7) en un métal pour soupapes, une couche d'oxyde disposée sur ce métal et servant de diélectrique, un électrolyte solide semiconducteur servant de cathode et un contact de cathode, et on soude à la borne d'anode (1), un fil d'anode (9) disposé dans la pièce d'anode,
qu'après le montage de la pièce d'anode (7), on sépare la borne de cathode (2) et la borne d'anode (1) par des zones de séparation (11, 12) dans la région de l'ouverture (3) ou de la découpe (14), et
qu'ensuite on prépare un remplissage en matière plastique (13), sur lequel on replie les bornes (1,2).

2. Procédé pour fabriquer un condensateur à électrolyte solide suivant la revendication 1, caractérisé par l'utilisation d'un élément fusible (4) formé d'un fil résistif (fusible).

3. Procédé pour fabriquer un condensateur à électrolyte solide suivant la revendication 1, caractérisé en ce que l'élément fusible (4) est en un métal de brasage.
